Europäisches Patentamt

European Patent Office

Office européen des brevets

(11) Veröffentlichungsnummer: **0 544 225 A1**

## (12) EUROPÄISCHE PATENTANMELDUNG

(21) Anmeldenummer: **92119981.6**

(22) Anmeldetag: **24.11.92**

(51) Int. Cl.5: **C02F 9/00**, C02F 1/52,
C02F 1/54, C02F 1/38

(30) Priorität: **25.11.91 DE 4138666**

(43) Veröffentlichungstag der Anmeldung:
**02.06.93 Patentblatt 93/22**

(84) Benannte Vertragsstaaten:
**AT BE CH DE ES FR IT LI NL**

(71) Anmelder: **SÜD-CHEMIE AG**
**Lenbachplatz 6**
**W-8000 München 2(DE)**

(72) Erfinder: **Huber, Anton, Dipl.-Ing.**
**Plantagenweg 376**
**W-8050 Freising(DE)**

(74) Vertreter: **Reitzner, Bruno, Dr. et al**
**Patentanwälte Dipl.-Ing. R. Splanemann Dr.**
**B. Reitzner, Dipl.-Ing. K. Baronetzky Tal 13**
**W-8000 München 2 (DE)**

(54) **Verfahren zur Vorreinigung von Abwässern.**

(57) Es wird ein Verfahren zur Vorreinigung von Abwässern mit hohen kolloidal dispergierten organischen Frachten beschrieben, das dadurch gekennzeichnet ist, daß man

(a) im Abwasser feinteilige anorganische Adsorptionsmittel und/oder Ionenaustauscher, deren Dichte mehr als 1,05 g/cm$^3$ beträgt, dispergiert;

(b) nach der Bindung der im Abwasser enthaltenen Schadstoffe der Abwasser-Adsorptionsmittel/Ionenaustauscher-Dispersion eine Lösung von Salzen mehrwertiger Metalle zusetzt;

(c) die so behandelte Dispersion mit einem kationischen oder anionischen organischen Flockungsmittel behandelt, bis sich eine Flocke gebildet hat, die sich aus der organischen Fracht, dem anorganischen Adsorptionsmittel bzw. Ionenaustauscher und dem organischen Flockungsmittel zusammensetzt;

(d) das die Flocke enthaltende Abwasser unter Vermeidung von Luftzutritt durch einen Hydrozyklon leitet;

(e) den an organischer Fracht reduzierten Überstand des Hydrozyklons (Feinlaufphase) in den Vorfluter, eine biologische Vorkläranlage oder in eine kommunale Kläranlage abgibt; und

(f) die Schlammphase aus dem Hydrozyklon in an sich bekannter Weise aufarbeitet.

EP 0 544 225 A1

Die Erfindung betrifft ein Verfahren zur Vorreinigung von Abwässern mit hohen, kolloidal dispergierten organischen Frachten.

Hohe, kolloidal dispergierte organische Frachten finden sich beispielsweise in Molkerei- und Schlachthofabwässern. Die organische Fracht besteht hier in erster Linie aus kolloidal dispergierten Proteinen und Fetten, deren Abtrennung aus den Abwässern sehr schwierig ist.

Eine biologische Vorklärung der Abwässer durch aeroben oder anaeroben Abbau der kolloidal dispergierten organischen Frachten setzt große Klärbecken voraus und ist sehr energieaufwendig.

Man hat bereits versucht, durch Zusatz von anorganischen und/oder organischen Flockungsmitteln zu den Abwässern eine Vorklärung zu erzielen, wobei die erhaltene Flocke entweder durch Sedimentation oder durch Flotation abgetrennt wurde. Der Trenneffekt war aber äußerst unbefriedigend, einmal, weil nur ein gewisser Teil der kolloidal dispergierten organischen Frachten ausflockte und zum anderen, weil sich die Flocke nur schwer von dem Abwasser trennen ließ.

Aus der DE-B-1 225 570 ist eine Anlage zur Rückgewinnung von in Walzwerksabwässern enthaltenem Sinter mit Hydrozyklonen, Absitzbehältern und gegebenenfalls einem Dosierbehälter für Flockungsmittel bekannt; bei dieser Anlage ist den Hydrozyklonen und Absitzbehältern eine Maschine zur Zerkleinerung der Sinterbestandteile vorgeschaltet. Neben den Flockungsmitteln können auch Beschwerungsmittel und gegebenenfalls Flockungshilfsmittel in das Abwasser eingeführt werden. Diese Zusätze werden gemeinsam eingeführt. Ferner enthält das Abwasser keine organischen Kolloide.

Aus der EP-A-0 159 178 ist ein Verfahren zur Behandlung von Wasser durch Zusatz eines Beschwerungsmittels und eines Flockungsmittels, d.h. eines Elektrolyten mit Kationen mehrwertiger Metalle, bekannt. Als Flockungsmittel können beispielsweise Eisen(III)-Sulfat oder Aluminiumsulfat verwendet werden. Als Beschwerungsmittel wird bevorzugt Calciumsulfat verwendet. Die Zusätze werden dem Wasser gemeinsam zugegeben. Die Abscheidung der gebildeten Flocke erfolgt durch Sedimentation. Die Verwendung von Calciumsulfat als Beschwerungsmittel führt zu Inkrustationen in den Leitungen. Außerdem wurde gefunden, daß es nachteilig ist, wenn man das Beschwerungsmittel zusammen mit den anderen Zusätzen zugibt, da sich ein Teil des Flockungsmittels mit dem Beschwerungsmittel verbindet und für die Fällung der kolloidal dispergierten Schwebstoffe nicht mehr zur Verfügung steht.

Aus der DE-A-3 700 725 ist ein Verfahren und eine Anlage zur Reinigung von Feinschlamm führendem Rohabwasser bekannt, wobei das Rohabwasser in einem Sedimentationseindicker mit Flockungsmitteln behandelt wird. Der aus dem Sedimentationseindicker unten abgezogene Feinschlamm wird mit Hilfe einer Entwässerungszentrifuge entwässert. In einem vorgeschalteten Zyklon werden nur der Feinsand und die Trübstoffe abgeschieden. Es ist also nicht beabsichtigt, daß gesamte Gemisch in einem Hydrozyklon zu behandeln.

Aus der AT-A-306 655 ist ein Verfahren zur Reinigung von Oberflächenwässern und von durch Schwebstoffe verunreinigten Betriebsabwässern unter Verwendung von festen mineralischen Absetzbeschleunigungsmitteln, Klärhilfsstoffen und kettenpolymeren Polyelektolyten bekannt, wobei das zu reinigende Wasser in einem Klärreaktor durch eine schwebende Flockenwirbelschicht filtriert, der Schlamm in einem oder mehreren Hydrozyklonen von den mineralischen Absetzbeschleunigungsmitteln getrennt und letztere im Kreislauf geführt werden. Als Absetzbeschleunigungsmittel werden inerte Substanzen, wie Siliciumcarbid, Borcarbid, Korund und Quarzsand verwendet; das Kettenpolymer wird nach dem Hydrozyklon zugesetzt, d.h. der Hydrozyklon dient nur der Schlammbehandlung. Ferner werden keine Adsorptionsmittel und Primärflockungsmittel zugesetzt.

Aus der EP-A-0 267 328 ist ein Verfahren und eine Vorrichtung zur Reinigung von verunreinigtem Wasser, insbesondere von bei der Entschlammung von Gewässern entstehendem Trübwasser bekannt, bei dem das Wasser in einer ersten Stufe mit einem Flockungsmittel (z.B. Fe(II)-Sulfat oder Fe(III)-Chloridsulfat, Natriumaluminat und/oder Bentonit) behandelt wird. Ferner kann auf dieser Stufe auch Kalkmilch zur Neutralisation sowie ein Sedimentationshilfsmittel zugesetzt werden. Anschließend erfolgt eine Trennung der Feststoffe von der Flüssigkeit mit Hilfe einer Zentrifuge, wobei die abgetrennte Flüssigkeit noch nicht klar ist. Der Flüssigkeit wird dann entweder Bentonit oder Natriumaluminat zugesetzt. Schließlich wird die Flocke durch Flotation abgetrennt. Es wird zur Abtrennung kein Hydrozyklon verwendet.

Aus der EP-A-0 265 941 ist ein Verfahren zur chemisch-physikalischen Aufbereitung von Abwasser bekannt, bei dem die suspendierten Verunreinigungen als Schlamm abgeschieden werden und der abgeschiedene Schlamm vor seiner Weiterbehandlung oder Deponierung in einer Schlammentwässerungsstufe entwässert wird. Bei diesem Verfahren werden dem Abwasser vor der Sedimentation in etwa gleicher Menge Kieselgur und Aktivkohle jeweils in Pulverform zugegeben. In einzelnem wird das Verfahren zweistufig durchgeführt, wobei in einer ersten sauren Aufbereitungsstufe ein Flockungshilfsmittel (Eisen(III)-Chlorid) zugesetzt wird. Dann wird die Kieselgur als Konditionierungsmittel zugesetzt, dann nochmals Eisen-(III)-Chlorid, anschließend Aktivkohle und ein Flockungshilfsmittel. Nach der Schlammabtrennung wird in einer zweiten Stufe eine Alkalisierung mit Calciumhydroxid durchgeführt, dann werden nochmals nacheinander Eisen(III)-Chlorid, Aktivkohle und Flockungshilfsmittel zugesetzt. Sowohl die Zwischenabscheidung als auch die Endabscheidung des Schlammes erfolgen mit Hilfe von Parallelplattenabscheidern.

Aus der AT-E-51 209 B ist ein Verfahrung und eine Vorrichtung zur Beseitigung von suspendiertem Material, biogenetischer Nährmittel und gelösten Metallverbindungen aus Klärwasser, das mit organischen und/oder anorganischen Substanzen verunreinigt ist, bekannt. Bei diesem Verfahren wird dem Abwasser ein Agens zugesetzt, das eine Mischung von Metallsalzen und Gesteinskörnern mit Zeolith mit einer Teilchengröße von < 200$\mu$m darstellt. Eine Trennung mit Hilfe von Hydrozyklonen wird nicht durchgeführt.

Aus der Literaturstelle "Wasserbehandlung durch Flockungsprozesse" von H.-J. Walther und F. Winkler, Akademie-Verlag Berlin (1981), Seiten 154 - 179, ist unter dem Stichwort "Einsatz von quellfähigen Dreischichtmineralien in der Wasserbehandlung" angegeben, daß schwierig zu klärende Suspensionen durch den kombinierten Einsatz von Flockungsmitteln, Bentonit und einem speziellen Flockulanten (Kondensationsprodukt von Alkylenpolyamiden mit polyfunktionellen Halogenhydrinen) aufbereitet werden können. Eine bestimmte Reihenfolge der Zugabe dieser Substanzen ist nicht angegeben. Weiterhin ist über die Verwendung von Hydrozyklonen zur Abtrennung der Feststoffe nichts gesagt.

Aus der Literaturstelle "Chemical Water and Wastewater Treatment", Springer-Verlag, Berlin 1990 (Hrsg. H.H. Hahn und R. Klute), Seiten 33-37 und 127-137 ist die Behandlung von Abwässern bekannt. Auf Seite 32ff ist angegeben, daß ein Modellabwasser mit kolloidalen Glasteilchen in zwei Teilströme im Verhältnis 1:1 unterteilt wird. Dem einen Teilstrom wird aktivierte kolloidale Kieselsäure als Flockungshilfsmittel zugesetzt, dem zweiten Teilstrom eine Aluminiumsalzlösung. Die Teilströme werden vereinigt, worauf die elektrophoretische Mobilität gemessen wird. Über die Trennung der festen von der flüssigen Phase ist nichts angegeben.

Auf Seite 127ff ist angegeben, daß bei der Wasseraufbereitung dem Wasser Mikrosand zusammen mit einem Polyeketrolyten zugesetzt wird. Die Fest-Flüssig-Trennung erfolgt in einer Lamellenklärvorrichtung. Die Mischung aus Mikrosand und organischem Schlamm wird in einem Hydrozyklon getrennt, und der Feinsand wird wieder zurückgeleitet. Ein Adsorptionsmittel wird nicht zugesetzt.

Aus der Literaturstelle "Chemical Abstracts", Vol 111, 1989, Seite 540; Ref.Nr. 111:22665h ist ein Verfahren zur Verarbeitung von Flüssigdünger bekannt, wobei dieser mit metallurgischer Schlacke und/oder Flugasche und/oder Braunkohlenstaub behandelt wird. Die Mischung wird ohne weitere Behandlung in einem Hydrozyklon getrennt, wobei im Hydrozyklon eine Behandlung mit einem Ionenaustauscher, wie Zeolith, erfolgt. Ferner werden ferromagnetische Substanzen zugesetzt, worauf die erste Phase in einem Magnetabscheider von der flüssigen Phase getrennt wird. Die flüssige Phase wird in einen mehrkammerigen Flockungs-Zyklon eingeführt und darin mit Aluminiumsulfat, Eisen(II)-Sulfat und Polyelektrolyten geflockt, gelüftet und filtriert, wobei Perlit-Pellets verwendet werden, die mit geschäumten Polyethylen, Dolomit oder Zeolith überzogen sind. Nach der Elektroflotation schließen sich noch weitere Behandlungsstufen an.

Der Erfindung lag die Aufgabe zugrunde, den Vorreinigungseffekt bei Abwässern mit hohen, kolloidal dispergierten organischen Frachten zu verbessern und diese in eine leicht abtrennbare Form überzuführen. Andererseits sollte der Restgehalt an organischen Frachten, ausgedrückt als chemischer Sauerstoffbedarf (CSB) des vorgereinigten Abwassers, möglichst niedrig sein, so daß dieses entweder unmittelbar oder nach einer relativ einfachen Klärung in den Vorfluter geleitet werden konnte.

Diese Aufgabe wird erfindungsgemäß durch ein Verfahren gelöst, das dadurch gekennzeichnet ist, daß man

(a) im Abwasser feinteilige anorganische Adsorptionsmittel und/oder Ionenaustauscher, deren Dichte mehr als 1,05 g/cm$^3$ beträgt, dispergiert;

(b) nach der Bindung der im Abwasser enthaltenen Schadstoffe der Abwasser-Adsorptionsmittel/Ionenaustauscher-Dispersion eine Lösung von Salzen mehrwertiger Metalle zusetzt;

(c) die so behandelte Dispersion mit einem kationischen oder anionischen organischen Flockungsmittel behandelt, bis sich eine Flocke gebildet hat, die sich aus der organischen Fracht, dem anorganischen Adsorptionsmittel/Ionenaustauscher und dem organischen Flockungsmittel zusammensetzt;

(d) das die Flocke enthaltende Abwasser unter Vermeidung von Luftzutritt durch einen Hydrozyklon leitet;

(e) den an organischer Fracht reduzierten Überstand des Hydrozyklons (Feinlaufphase) in den Vorfluter, eine biologische Vorkläranlage oder in eine kommunale Kläranlage abgibt; und

(f) die Schlammphase aus dem Hydrozyklon in an sich bekannter Weise aufarbeitet.

Der Grundgedanke der vorliegenden Erfindung liegt in der Erzeugung einer schweren Flocke, die mit Hilfe eines Hydrozyklons abgeschieden werden kann.

Hydrozyklone sind konische Geräte, in denen Suspensionen ohne rotierende Apparateteile durch tangentiales Einströmen in Rotation versetzt werden. Man hat Hydrozyklone bisher hauptsächlich nur zum Trennen, Eindicken und Entwässern flüssiger Suspensionen und Schlämme verwendet, nicht aber zur Abscheidung von flockenförmigen Schwebstoffen aus Abwässern. Der Grund hierfür war wahrscheinlich folgender: in einem Hydrozyklon induziert die tangential einströmende Flüssigkeit eine starke Wirbelströmung. Andererseits handelt es sich bei den Flocken um äußerst instabile Gebilde, und man konnte erwarten, daß diese durch die intensive Wirbelströmung in kleinere Fragmente zerrissen würden, die sich dann nicht mehr so leicht abscheiden ließen. Überraschenderweise wurde jedoch gefunden, daß die Flocke bei den üblichen Betriebsbedingungen der Hydrozyklone stabil bleibt und sich leicht abscheiden läßt.

Ein Hydrozyklon ist ein sehr kompaktes Gerät, das wenig Platz beansprucht, aber andererseits in der Lage ist, in einer bestimmten Zeit große Flüssigkeitsmengen zu verarbeiten.

Mit Hilfe eines Hydrozyklons ist also eine dezentrale Vorreinigung von Abwässern möglich, d.h. jeder Einleiter (z.B. auch eine kleine Molkerei) kann auf seinem Betriebsgelände einen Hydrozyklon installieren. Er benötigt also kein großes Vorklärbecken, damit er seine Abwässer in den Vorfluter bzw. in eine kommunale Kläranlage leiten kann.

Im allgemeinen geht man von einem Abwasser mit einem CSB-Wert von 500 bis 200.000 mg $O_2$/l, vorzugsweise von 1.000 bis 20.000 mg $O_2$/l, aus. Diese Werte sind bei Abwässern von Molkereien und Schlachthöfen üblich und erfordern zwingend eine Vorreinigung des Abwassers. Der CSB-Wert derartiger Abwässer wird zum einem durch kolloidal dispergierte organische Substanzen, wie Eiweißstoffe und emulgierte Fette und zum anderen durch molekular gelöste Substanzen (bei Molkereien z.B. Milchzucker) bestimmt. Mit Hilfe des vorliegenden Verfahrens können nur die kolloidal dispergierten organischen Substanzen entfernt werden, da die molekular gelösten organischen Substanzen keine Flocken bilden, es sei denn, daß man sie vorher durch Zusatz von Fällungsmitteln ausfällt.

Es hat sich auch als vorteilhaft erwiesen, den pH-Wert des Abwassers vor der Stufe (b), d.h. entweder vor oder nach der Zugabe des Adsorptions- bzw. Ionenaustauschers, auf 7,5 bis 10, vorzugsweise auf 8 bis 9, einzustellen. Da die Abwässer im allgemeinen schwach sauer sind, erfolgt die Einstellung des pH-Wertes zweckmäßig mit Hilfe von Calciumhydroxid oder - carbonat, da es sich hierbei um relativ billige Neutralisationsmittel handelt. Natürlich können als Neutralisationsmittel beispielsweise auch Natriumhydroxid oder Natriumcarbonat verwendet werden.

Für das feinteilige Adsorptionsmittel ist eine gewisse Dichte erforderlich, damit im Hydrozyklon eine effektive Abscheidung erfolgt. Weiterhin ist im Hydrozyklon auf Luftfreiheit zu achten, um Flotationseffekte zu verhindern, die im Ergebnis zu einer Verminderung der Dichte der Flocke führen würden.

Mit Hilfe der anorganischen Adsorptionsmittel und/oder Ionenaustauscher lassen sich auch gelöste Verbindungen, wie Aminosäuren, Schwermetallionen, Chlorkohlenwasserstoffe und Phenole binden. Vorzugsweise haben die feinteiligen Ionenaustauscher eine Ionenumtauschfähigkeit von 10 bis 100 mVal/100 g, vorzugsweise von 20 bis 80 mVal/100 g.

Die feinteiligen Adsorptionsmittel bzw. Ionenaustauscher werden vorzugsweise in einem Teilchengrößenbereich von 0,01 bis 150, vorzugsweise von 0,1 bis 20 $\mu$m, verwendet und üblicherweise in Mengen von 0,01 bis 10, vorzugsweise von 0,1 bis 3 kg/m$^3$ Abwasser eingesetzt.

Als feinteilige Adsorptionsmittel und/oder Ionenaustauscher verwendet man beispielsweise Kieselgele, Bentonite (Hauptmineral Montmorillonit), Zeolithe und andere Aluminosilikate. Unter den Zeolithen ist insbesondere der Klinoptilolith zu nennen. Weitere geeignete Aluminosilikate, die wie der Montmorillonit zum Strukturtyp der Dreischichtminerale gehören, sind z.B. Pyrophyllit, Beidellit, Vermiculit, Illit, Hectorit und Glauconit. Die genannten Aluminosilikate sind insbesondere in der Lage, Schwermetallionen, daneben auch andere Schadstoffe zu binden.

Einige dieser Ionenaustauscher, wie die Bentonite, liegen in Form von negativ geladenen Teilchen in den Suspension vor und werden nach dem Zusatz einer Lösung von Salzen mehrwertiger Metalle in der Stufe (b) zu größeren, lockeren Aggregaten vereinigt, an denen die kolloidal dispergierten organischen Substanzen gebunden sind.

Vorzugsweise setzt man in der Stufe (b) eine Lösung von Al-, Fe-(II)- oder -(III)-, Ca- und/oder Mg-Salzen, insbesondere der Chloride zu, die gegebenenfalls noch kolloidale Kieselsäure enthält. Die kolloidale Kieselsäure bewirkt eine adsorptive Bindung von Schadstoffen, wie Schwermetallen, Phenolen und Chlorkohlenwasserstoffen.

Man verwendet die Lösung der Salze der mehrwertigen Metalle vorzugsweise in einer Menge von 0,01 bis 10, insbesondere von 0,1 bis 3 Liter je m$^3$ Abwasser-Adsorptionsmittel/Ionenaustauscher bezogen auf eine 15 gew.-%ige Lösung. Man kann die Salzlösung natürlich auch in niedrigeren oder höheren Konzentrationen 6 einsetzen, wobei man dann entsprechend mehr oder weniger Lösung verwendet.

Die Lösung der Salze der mehrwertigen Metalle wird im allgemeinen in solchen Mengen zudosiert, daß sich ein pH-Wert von > 5 einstellt, wobei es auch auf den pH-Wert ankommt, der vor der Stufe (b) eingestellt wurde. Der pH-Wert ist vorzugsweise < 6 und liegt insbesondere zwischen 5 und 7. Kolloidal

EP 0 544 225 A1

dispergiertes Fett oder Blut koaguliert bei einem pH-Wert von < 7.

Die nach Stufe (b) erhaltene Dispersion bildet noch keine Flocke, d.h. diese bildet sich erst in Stufe (c) nach dem Zusatz des organischen Flockungsmittels. Die Flockenbildung beruht wahrscheinlich darauf, daß sich das organische Flockungsmittel an die negativ geladenen Teilchen des anorganischen Ionenaustauscher oder an den positiv geladenen anorganischen Flockungsmitteln anlagert. Vorzugsweise verwendet man als Flockungsmittel kationische Kohlenhydrate oder synthetische kationische Polyelektrolyte. Beispiele für kationische Kohlenhydrate sind kationische Stärke oder Guar. Die synthetischen Polyelektrolyte sind auf der Basis von Polyacrylamid, Polyacrylat, Polyethylenimmin und Polyethylenoxid.

Das organische Flockungsmittel wird vorzugsweise in einer Menge von 0,1 bis 500, insbesondere in einer Menge von 1 bis 30 g je $m^3$ Abwasser eingesetzt.

Wie bereits vorstehend ausgeführt, wird die erhaltene Flocke nicht aufgebrochen, wenn der Hydrozyklon bei den üblichen Betriebsbedingungen eingesetzt wird. Die Abscheidungsgeschwinddigkeit wird einerseits durch die Zentrifugalgeschwindigkeit der Strömung im Hydrozyklon und andererseits durch die Flockengröße bestimmt. Da bei einer höheren Geschwindigkeit die Turbulenzeffekte zunehmen, hält man in der Stufe (d) zwischen dem Einlauf und dem Auslauf des Hydrozyklons vorzugsweise ein

Druckdifferenz von nicht mehr als 20 bar, insbesondere von 1 bis 2 bar aufrecht. Auf diese Weise sind einerseits die Gravitationskräfte für die Abscheidung der Flocke noch hoch genug, und zum anderen bleibt die Struktur der Flocke im wesentlichen erhalten.

Nach dem Hydrozyklon ist das behandelte Abwasser in einen an organischer Fracht verarmten Überstand (Feinlaufphase), die am Kopf des Hydrozyklons austritt, und in eine Schlammphase getrennt, die am unteren Ende des Hydrozyklons austritt.

Der CSB der Feinlaufphase beträgt etwa 200 bis 800, wenn der CSB des unbehandelten Abwassers 1000 bis 3000 betrug, d.h. es findet eine CSB-Reduzierung von 40 bis 80 % statt. Wenn der CSB-Wert der Feinlaufphase niedrig ist, kann diese eventuell unmittelbar in den Vorfluter geleitet werden; anderenfalls kann die Feinlaufphase in eine biologische Vorkläranlage oder in eine kommunale Kläranlage abgegeben werden.

Die aus dem Hydrozyklon austretende Schlammphase wird im allgemeinen entwässert, was beispielsweise mit Hilfe einer Kammerfilterpresse, einer Siebbandpresse, einer Schneckenentwässerungsmaschine oder einer Zentrifuge geschehen kann. Anschließend kann der Schlamm (gegebenenfalls nach dem Trocknen) verbrannt oder deponiert werden; er kann aber auch landwirtschaftlich genutzt werden, insbesondere wenn er einen niedrigen Schadstoffgehalt hat.

Die Erfindung ist anhand der nachstehenden Zeichnung erläutert.

Ein stark verschmutztes Molkereiabwasser, das als kolloidal disperse organische Fracht insbesondere Eiweißstoffe und emulgiertes Fett enthielt (CSB-Wert etwa 5500 mg $0_2$/l) wird über die Abwasserleitung 2 in einer Menge von 500 l/h in einem mit Rührwerk versehenen Mischbehälter 4 eingeleitet. Dem Abwasser, dessen pH-Wert etwa 6 beträgt, wird über den Neutralisiermittelbehälter 6 eine Suspension von Calciumcarbonat oder Calciumhydroxid zudosiert, wodurch sich ein pH-Wert von 8,5 einstellt. Aus einem weiteren Zugabebehälter 8 wird ein Bentonitpulver mit einer mittleren Teilchengröße von 1 bis 30 $\mu m$ und einer IUF von 60 mVal /100 g zudosiert und mit Hilfe des Rührwerks im Abwasser dispergiert. Das Bentonitpulver hat eine Schüttdichte von 0,75 g/$cm^3$. Das Gewichtsverhältnis zwischen Bentonitpulver und Abwasser beträgt etwa 0,5 bis 10 : 1000. Durch die Rücklaufleitung 10 wird Rücklaufwasser aus der Schlammentwässerung, die nachstehend noch näher erläutert ist, in den Mischbehälter 4 eingeleitet.

Der pH-Wert der aus dem Mischbehältr 4 austretenden Abwasser-Betonit-Dispersion wird mit Hilfe eines pH-Reglers 12 bestimmt, der auch die Zugabe der Lösung von Salzen mehrwertiger Metalle aus dem Behälter 14 regelt. Im speziellen Fall wurde eine Lösung mit folgender Zusammensetzung

$$7 \text{ g } Fe^{3+}/l \qquad\qquad 3 \text{ g } Mg^{2+}/l$$
$$11 \text{ g } Al^{3+}/l \qquad\qquad 85 \text{ g } Cl^{-}/l$$
$$3 \text{ g } Ca^{2+}/l$$

in einer Menge von 1 l/h zudosiert, wobei sich der pH-Wert vor dem Eintritt in die Pumpe 16 auf 7 einstellte. Aus dem Zugabebehälter 18 wird ein organisches Flockungsmittel, im speziellen Fall eine 0,1 gew.-%ige Lösung eines mittelkationischen hochmolekularen Polyacrylamids in einer Menge von 5 g/l zudosiert. Die Zugabemenge wird mit Hilfe des Durchflußreglers 20 geregelt. Das Flockungsmittel wird mit der Abwasser-Bentonit-Dispersion im Statikmischer 22 gut miteinander vermischt, wobei sich eine große

5

Flocke aus der Eiweiß- und Fettkomponente, dem Bentonit und dem organischen Flockungsmittel bildet, die aber im Abwasser bei leichten Bewegungen in der Schwebe bleibt.

Das die Flocke enthaltende Abwasser, das nach dem Durchgang durch den Statikmischer 22 keine Luftblasen mehr enthält, wird über die Zuleitung 24 tangential in den Hydrozyklon 26 eingeführt. Der Hydrozyklon hatte im speziellen Fall einen Durchmesser von etwa 8 cm, eine Zylinderhöhe von etwa 20 cm und eine Konushöhe von etwa 60 cm. Der Flüssigkeitsdruck in der Zuleitung 24 betrug 2 bar.

Die Feinlaufphase, d.h. das vorgereinigte Abwasser wird über die Leitung 28, die am oberen Ende des zylindrischen Teils des Hydrozyklons 26 ausgeht, entweder in den Vorfluter, in eine biologische Kläranlage oder in eine kommunale Kläranlage geleitet. Im speziellen Fall lag der CSB-Wert des vorgereinigten Abwassers bei weniger als 3900 mg/l, d.h. es wurde eine Reinigungswirkung von mehr als 50 % erzielt. Die Feinablaufphase betrug etwa 95 % der gesamten Abwassermenge.

Die Schlammphase kann im einfachsten Fall am unteren Ende des Hydrozyklons 26 durch die Leitung 30 abgezogen und in einen Faulturm (nicht dargestellt) geleitet werden. Im Faulturm wird die organische Fracht anaerob in nutzbares Biogas umgewandelt, und das verbleibende Abwasser kann entweder in den Vorfluter, in eine biologische Vorklärung oder in eine kommunale Kläranlage geleitet werden.

Die Schlammphase kann aber auch mit Hilfe einer Schneckenpumpe 32 aus dem Hydrozyklon 26 entfernt und weiter aufgearbeitet werden. Zunächst kann über dem Neutralisiermittelbehälter 34 z.B. Calciumhydroxid zudosiert werden. Anschließend wird über den Behälter 36 eine Lösung von Salzen mehrwertiger Metalle (ähnlich wie die Lösung aus dem Behälter 14) zudosiert. Das Gemisch wird durch einen Statikmischer 38 geleitet und anschließend mit einem organischen Flockungsmittel aus dem Behälter 14 vermischt. Das Gemisch wird wiederum im Statikmischer 42 vermischt. Hierbei bildet sich ein verhältnismäßig leicht trennbares Schlamm-Wasser-Gemisch. Dieses Gemisch kann entweder über die Schlammableitung 44 in eine Kammerfilterpresse oder Siebbandpresse 46 oder über die Schlammableitung 52 in die Schneckenentwässerungsmaschine oder Zentrifuge 54 geleitet werden. Das Filtratwasser wird in beiden Fällen durch die Leitungen 10 abgezogen und in den Mischbehälter 4 zurückgeleitet.

Der entwässerte Dickschlamm wird durch die Leitungen 48 bzw. 56 in den Behälter 50 geleitet, von wo aus er gegebenenfalls weitergetrocknet und deponiert bzw. verbrannt werden kann. Im vorliegenden speziellen Fall hatte der Dickschlamm einen Schwermetallgehalt von weniger als 1000 ppm Zn, 200 ppm Pb, 200 ppm Cu, 200 ppm Cr, 50 ppm Ni, 4 ppm Cd und 3 ppm Hg, so daß er der landwirtschaftlichen Verwertung zugeführt werden konnte.

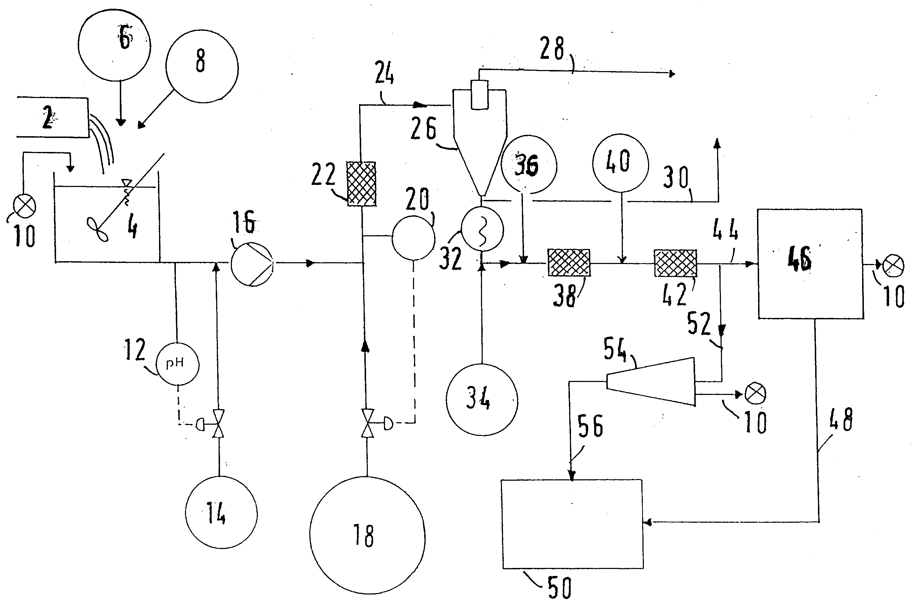

**Patentansprüche**

1. Verfahren zur Vorreinigung von Abwässern mit hohen, kolloidal dispergierten organischen Frachten, dadurch gekennzeichnet, daß man
    (a) im Abwasser feinteilige anorganische Adsorptionsmittel und/oder Ionenaustauscher, deren Dichte mehr als 1,05 g/cm$^3$ beträgt, dispergiert;
    (b) nach der Bindung der im Abwasser enthaltenen Schadstoffe der Abwasser-Adsorptionsmittel/Ionenaustauscher-Dispersion eine Lösung von Salzen mehrwertiger Metalle zusetzt;
    (c) die so behandelte Dispersion mit einem kationischen oder anionischen organischen Flockungsmittel behandelt, bis sich eine Flocke gebildet hat, die sich aus der organischen Fracht, dem anorganischen Adsorptionsmittel bzw. Ionenaustauscher und dem organischen Flockungsmittel zusammensetzt;
    (d) das die Flocke enthaltende Abwasser unter Vermeidung von Luftzutritt durch einen Hydrozyklon leitet;
    (e) den an organischer Fracht reduzierten Überstand des Hydrozyklons (Feinlaufphase) in den Vorfluter, eine biologische Vorkläranlage oder in eine kommunale Kläranlage abgibt; und
    (f) die Schlammphase aus dem Hydrozyklon in an sich bekannter Weise aufarbeitet.

2. Verfahren nach Anspruch 1, dadurch gekennzeichnet, daß man von einem Abwasser mit einem CSB-Wert von 500 bis 200.000, vorzugsweise von 1000 bis 10.000 ausgeht.

3. Verfahren nach Anspruch 1 oder 2, dadurch gekennzeichnet, daß man den pH-Wert des Abwassers vor der Stufe (b) auf 7 bis 11, vorzugsweise auf 8 bis 8,5, einstellt.

4. Verfahren nach einem der Ansprüche 1 bis 3, dadurch gekennzeichnet, daß man feinteilige Adsorptionsmittel bzw. Ionenaustauscher mit einer Ionenumtauschfähigkeit (IUF) von 10 bis 100, vorzugsweise von 20 bis 80 mVal/100 g, verwendet.

5. Verfahren nach einem der Ansprüch 1 bis 4, dadurch gekennzeichnet, daß man feinteilige Adsorptionsmittel bzw. Ionenaustauscher mit einem Teilchengrößenbereich von 0,1 bis 100 μm, vorzugsweise von 1 bis 30 μm, verwendet.

6. Verfahren nach einem der Ansprüche 1 bis 5, dadurch gekennzeichnet, daß man die feinteiligen Adsorptionsmittel bzw. Ionenaustauscher in Mengen von 0,1 bis 10, vorzugsweise von 0,5 bis 3 kg/m$^3$ Abwasser einsetzt.

7. Verfahren nach einem der Ansprüche 1 bis 6, dadurch gekennzeichnet, daß man als feinteiliges Adsorptionsmittel bzw. Ionenaustauscher Kieselgele, Bentonite, Zeolithe und andere Aluminosilikate verwendet.

8. Verfahren nach einem der Ansprüche 1 bis 7, dadurch gekennzeichnet, daß man der Abwasser-Adsorptionsmittel/Ionenaustauscher-Dispersion (Stufe b) eine Lösung von Al-, Fe(II)- oder -(III)-, Ca-und/oder Mg-Salzen, insbesondere der Chloride, zusetzt, die gegebenenfalls noch kolloidale Kieselsäure enthält.

9. Verfahren nach einem der Ansprüche 1 bis 8, dadurch gekennzeichnet, daß man die Lösung der Salze der mehrwertigen Metalle in einer Menge von 0,2 bis 5, vorzugsweise von 1 bis 3 Liter je m$^3$ Abwasser-Adsorptionsmittel/Ionenaustauscher-Dispersion (bezogen auf eine 15 gew.-%ige Lösung) zusetzt.

10. Verfahren nach einem der Ansprüche 1 bis 9, dadurch gekennzeichnet, daß man als kationisches oder anionisches organisches Flockungsmittel (Stufe c) ein kationisches oder anionisches Kohlenhydrat oder einen kationischen Polyelektrolyten auf der Basis von Polyacrylamid, Polyacrylat, Polyethylenimin und/oder Polyethylenoxid oder ein anionisches Copolylmer aus Acrylamid und Natriumacrylat zusetzt.

11. Verfahren nach einem der Ansprüche 1 bis 10, dadurch gekennzeichnet, daß man das kationische oder anionische organische Flockungsmittel in Mengen von 0,5 bis 100, vorzugsweise von 1 bis 10 kg je m$^3$ Abwasser (in Form einer 0,1 gew.- %-igen Lösung einsetzt.

12. Verfahren nach einem der Ansprüche 1 bis 11, dadurch gekennzeichnet, daß man in der Stufe (d) zwischen dem Einlauf und dem Auslauf des Hydrozyklons eine Druckdifferenz von nicht mehr als 20 bar, vorzugsweise von 1 bis 5 bar, aufrechterhält.

13. Verfahren nach einem der Ansprüche 1 bis 12, dadurch gekennzeichnet, daß man die Schlammphase aus dem Hydrozykon (Stufe f) entwässert und anschließend verbrennt, deponiert oder landwirtschaftlich nutzt.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,X | CH-A-546 208 (TATABANYA SZENBANYAK)<br>* Spalte 6; Anspruch I *<br>* Spalte 1, Zeile 63 - Spalte 2, Zeile 32 *<br>* Spalte 3, Zeile 19 - Zeile 34 *<br>* Spalte 3, Zeile 46 - Spalte 4, Zeile 21 *<br>* Spalte 4; Beispiel 1 *<br>--- | 1-3,5-13 | C02F9/00<br>C02F1/52<br>C02F1/54<br>C02F1/38 |
| X | DE-B-1 271 641 (CENTROPA HANDELSGESELLSCHAFT M.B.H)<br>* Spalte 6; Anspruch 1 *<br>* Spalte 3, Zeile 8 - Spalte 4, Zeile 34 *<br>* Spalte 4, Zeile 60 - Zeile 68 *<br>* Spalte 5; Tabelle II *<br>--- | 1,5-8,10 | |
| A | GB-A-2 146 486 (BRITISH NUCLEAR FUELS LIMITED)<br>* Seite 2; Ansprüche 1-4,6 *<br>* Seite 1, Zeile 42 - Zeile 45 *<br>* Seite 1, Zeile 46 - Zeile 48 *<br>--- | 1,3,5,8,10 | |
| A | GB-A-1 512 481 (SIMON-HARTLEY LIMITED)<br>* Seite 2; Ansprüche 1-8 *<br>* Seite 1, Zeile 90 - Seite 2, Zeile 5 *<br>--- | 1-3 | **RECHERCHIERTE SACHGEBIETE (Int. Cl.5)**<br><br>C02F<br>B01D |
| A | EP-A-0 379 997 (NOVEX NEMZETKÖZI TECHNOLOGIATRANSZFER KÜLKERESKEDELMI RESZVENYTARSASAG)<br>* Seite 5; Ansprüche 1-5 *<br>--- | 1,7,10 | |
| A | FR-A-2 551 048 (SOCIETE NATIONALE ELF AQUITAINE)<br>* Seite 4; Ansprüche 1,3 *<br>--- | 1,7 | |
| A | DE-A-3 603 094 (PROAQUA-PROVITA DEUTSCHLAND)<br>* Spalte 1; Ansprüche 1,2,7 * | 1,7,8 | |

-----

Der vorliegende Recherchenbericht wurde für alle Patentansprüche erstellt

| Recherchenort | Abschlußdatum der Recherche | Prüfer |
|---|---|---|
| DEN HAAG | 02 MAERZ 1993 | TEPLY J. |